# EUROPÄISCHE PATENTANMELDUNG

(11) **EP 0 672 840 A2**
(43) Veröffentlichungstag der Anmeldung: **20.09.1995**
(21) Anmeldenummer: 95890014.4
(22) Anmeldetag: 17.01.1995
(51) Int. Cl.: F16C 33/12

(54) **Gleitlager**

(30) Priorität: 21.02.1994 AT 342/94
(71) Anmelder: MIBA Gleitlager Aktiengesellschaft, A-4663 Laakirchen (AT)
(72) Erfinder: Koroschetz, Franz Dr., A-4810 Gmunden (AT); Pühringer, Erich Ing., A-4664 Oberweis (AT)
(74) Vertreter: Hübscher, Heiner, Dipl.-Ing.

(57) **Zusammenfassung**

Um die Dauerfestigkeit eines Gleitlagers mit einer Stützschale (3) und einer walzplattierten Laufschicht (1) aus einer Aluminiumlegierung mit dispergierten, weichen Einlagerungen (2) zu verbessern, wird vorgeschlagen, daß die Laufschicht (1) auf einer Schicht (5) aus einer aushärtbaren Aluminiumlegierung aufgebracht ist.

## Beschreibung

Die Erfindung bezieht sich auf ein Gleitlager mit einer Stützschale und einer walzplattierten Laufschicht aus einer Aluminiumlegierung mit dispergierten, weichen Einlagerungen.

Da Laufschichten aus einer Aluminiumlegierung mit dispergierten, weichen Einlagerungen beim Walzplattieren keine ausreichende Haftung auf einer stählernen Stützschale aufweisen, wird die Laufschicht zunächst durch einen Walzvorgang mit einer Folie aus technisch reinem Aluminium verbunden, bevor dieser Schichtverbund auf die Stützschale aufplattiert wird. Die Zwischenschicht aus der Aluminiumfolie stellt zwar einen ausreichenden Haftvermittler sicher, doch bleibt die Dauerfestigkeit solcher walzplattierter Lager vergleichsweise gering, und zwar einerseits wegen der Werkstoffeigenschaften der Aluminiumzwischenschicht und anderseits zufolge der erforderlichen Dicke der Laufschicht, die eine vorgegebene Verschleißreserve sicherstellen muß, weil die Aluminiumzwischenschicht nicht einmal Notlaufeigenschaften aufweist.

Um die Dauerfestigkeit gattungsgemäßer Gleitlager zu verbessern, wäre es naheliegend, an Stelle einer Zwischenschicht aus technisch reinem Aluminium eine Zwischenschicht mit einer höheren Festigkeit, beispielsweise eine Folie aus AlCu1Ni0,5, einzusetzen. Versuche mit solchen Folien haben allerdings gezeigt, daß mit dem Walzplattieren aufgrund der damit verbundenen Kaltverformung eine Verfestigung und Versprödung dieser mischkristallgehärteten Aluminiumfolie mit der Folge einhergehen, daß die Haftung beeinträchtigende Risse auftreten.

Der Erfindung liegt somit die Aufgabe zugrunde, ein Gleitlager der eingangs geschilderten Art so auszugestalten, daß die Dauerfestigkeit erheblich gesteigert werden kann.

Die Erfindung löst die gestellte Aufgabe dadurch, daß die Laufschicht auf einer Schicht aus einer aushärtbaren Aluminiumlegierung aufgebracht ist.

Obwohl aushärtbare Aluminiumlegierungen selbst im weichgeglühten Zustand härter als mischkristallgehärtete Aluminiumlegierungen sind, können solche aushärtbaren Aluminiumlegierungen in überraschender Weise mit Laufschichten auf Aluminiumbasis walzplattiert werden, ohne eine Verminderung der Haftung der Laufschicht auf der Stützschale befürchten zu müssen. Der Grund hiefür ist wohl darin zu suchen, daß die aushärtbaren Aluminiumlegierungen bei einer Kaltumformung einer erheblich geringeren Versprödung und Verfestigung unterliegen, so daß eine Rißbildung weitgehend ausgeschlossen werden kann. Folien aus aushärtbaren Aluminiumlegierungen eignen sich daher als Haftvermittler zwischen Laufschichten auf Aluminiumbasis und stählernen Stützschalen, wobei der Vorteil einer merklichen Erhöhung der Dauerfestigkeit dieser Gleitlager erzielt wird.

Durch das Aushärten dieser aushärtbaren Aluminiumlegierungen kann sogar eine für eine Stützschale ausreichende Festigkeit erreicht werden, was den Einsatz dieser ausgehärteten Aluminiumlegierungen als Stützschale ermöglicht, auf die die Laufschicht ohne Zwischenschicht aufgewalzt werden kann.

Besonders vorteilhafte Konstruktionsbedingungen werden in weiterer Ausbildung der Erfindung dann erhalten, wenn die aushärtbare Aluminiumlegierung Notlaufeigenschaften aufweist, weil in diesem Fall die Dicke der Laufschicht verringert werden kann, die dann nicht mehr die am Ende der Laufzeit des Lagers benötigte Verschleißreserve bilden muß. Dünnere Laufschichten tragen aber in bekannter Weise zur Erhöhung der Dauerfestigkeit bei, so daß durch den Einsatz von aushärtbaren Aluminiumlegierungen mit Notlaufeigenschaften aufgrund der möglichen Verringerung der Laufschichtdicke besonders günstige Werte für die Dauerfestigkeit des Gleitlagers erreicht werden können.

In der Zeichnung ist der Erfindungsgegenstand im Vergleich zum Stand der Technik beispielsweise dargestellt. Es zeigen
- Fig. 1: ein gattungsgemäßes Gleitlager gemäß dem Stand der Technik ausschnittsweise in einem Schnitt durch die Laufschicht.
- Fig. 2: eine der Fig. 1 entsprechende Darstellung eines erfindungsgemäßen Gleitlagers und
- Fig. 3: eine Konstruktionsvariante eines erfindungsgemäßen Gleitlagers in einem Schnitt entsprechend der Fig. 2.

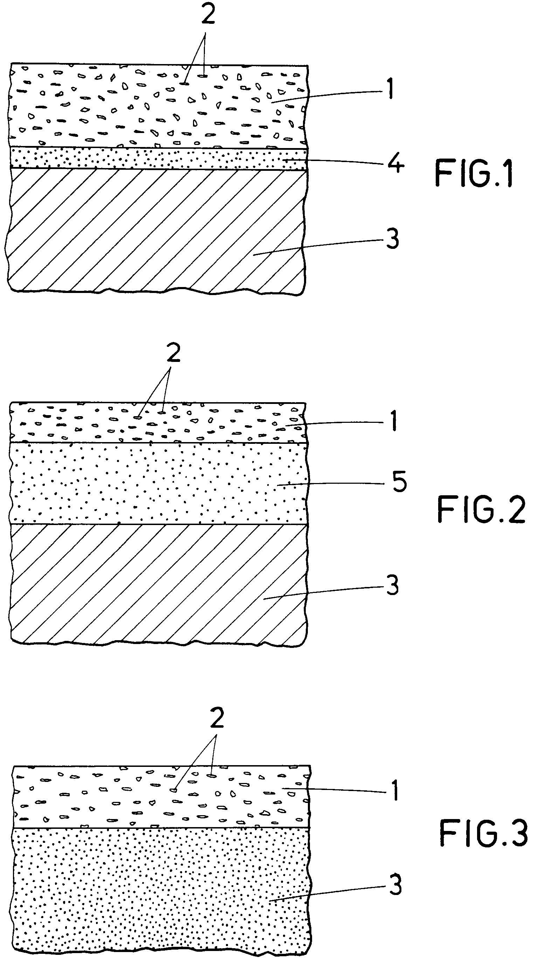

Um eine Laufschicht 1 aus einer Aluminiumlegierung mit dispergierten, weichen Einlagerungen 2 auf eine Stützschale 3 aus Stahl aufplattieren zu können, wird nach dem Stand der Technik gemäß der Fig. 1 zunächst diese Laufschicht, beispielsweise eine AlSn20-Schicht, mit einer Reinaluminiumfolie 4 durch ein Walzplattieren verbunden, bevor dieser Schichtverbund auf die stählerne Stützschale 3 aufplattiert wird. Da diese Reinaluminiumfolie eine Härte von etwa 28 HV 0,5 gegenüber einer Härte von etwa 35 bis 40 HV 0,5 der Laufschicht aufweist, bleibt die Dauerfestigkeit solcher Lager naturgemäß beschränkt. zumal die Laufschichtdicke größer als 0,3 mm sein muß, um eine ausreichende Verschleißreserve sicherzustellen.

Gemäß der Erfindung wird die Laufschicht 1 mit einer aushärtbaren Aluminiumlegierung durch ein Walzplattieren verbunden, die entweder gemäß der Fig. 2 eine Zwischenschicht 5 zwischen der Laufschicht 1 und der stählernen Stützschale 3 oder gemäß Fig. 3 nach einem Aushärten die Stützschale 3 selbst bildet. Daß durch eine härtere Zwischenschicht 5 die Dauerfestigkeit des Gleitlagers verbessert werden kann, ist zwar zu erwarten, doch ist es für den Fachmann überraschend, daß durch eine aushärtbare Aluminiumlegierung die Haftung der Laufschicht auf der Stützschale 3 nicht beeinträchtigt wird, wie dies beispielsweise bei Zwischenschichten aus nicht härtbaren Aluminiumlegierungen aufgrund der Rißbildung der Fall ist, obwohl diese mischkristallgehärteten Aluminiumlegierungen, z. B. AlCu1Ni0,5, eine geringere Härte als selbst weichgeglühte aushärtbare Aluminiumlegierungen aufweisen. Besondere Vorteile ergeben sich dabei, wenn die aushärtbaren Aluminiumlegierungen Notlaufeigenschaften besitzen, wie dies z. B. bei AlZn4SiPb gegeben ist. Wegen der Notlaufeigenschaften der aushärtbaren Aluminiumlegierungen braucht die Laufschicht 1 nicht mehr die Verschleißreserve zu bilden, so daß die Laufschichtdicke bei einer entsprechenden Dicke der Zwischenschicht 5 verringert werden kann. Gemäß dem Ausführungsbeispiel nach der Fig. 2 wurde für die Zwischenschicht 5 eine Dicke von 0,4 mm und für die Laufschicht eine Dicke von 0,2 mm gewählt. Die Härte der Zwischenschicht 5 kann bei einer Legierung AlZn4SiPb mit etwa 60 HV 0,5 und die der Laufschicht (AlSn20Cu) mit etwa 35 bis 40 HV 0,5 angegeben werden. Die von der Laufschicht 1 über die Zwischenschicht 5 zur Stützschale 3 stets zunehmende Härte wirkt sich dabei günstig auf die Dauerfestigkeit und damit auf die Belastbarkeit und die Lebensdauer des Gleitlagers aus.

Wie die Fig. 3 zeigt, kann die aushärtbare Aluminiumlegierung auch ausgehärtet und dann als Stützschale selbst eingesetzt werden, die die Laufschicht 1 ohne Zwischenschicht trägt.

Die Erfindung ist selbstverständlich nicht auf die Ausführungsbeispiele beschränkt, so könnten als Laufschicht alle geeigneten Aluminiumlegierungen mit weichen Einlagerungen aus Sn, Pb oder Bi eingesetzt werden. Als aushärtbare Aluminiumlegierungen zum Walzplattieren mit einer Laufschicht auf Aluminiumbasis eignen sich neben AlZn4SiPb auch in besonderere Weise AlZn4,5Mg, AlSi11CuMgNi oder AlMgSi1.

## Patentansprüche

1. Gleitlager mit einer Stützschale (3) und einer walzplattierten Laufschicht (1) aus einer Aluminiumlegierung mit dispergierten, weichen Einlagerungen (2), dadurch gekennzeichnet, daß die Laufschicht (1) auf einer Schicht (5) aus einer aushärtbaren Aluminiumlegierung aufgebracht ist.

2. Gleitlager nach Anspruch 1, dadurch gekennzeichnet, daß die aushärtbare Aluminiumlegierung als Zwischenschicht (5) zwischen der Laufschicht (1) und der Stützschale (3) ausgebildet ist.

3. Gleitlager nach Anspruch 1, dadurch gekennzeichnet, daß die ausgehärtete Aluminiumlegierung die Stützschale (3) bildet.

4. Gleitlager nach einem der Ansprüche 1 bis 3, dadurch gekennzeichnet, daß die aushärtbare Aluminiumlegierung Notlaufeigenschaften aufweist.
